# EUROPEAN PATENT SPECIFICATION

(11) **EP 1 657 086 B1**
(45) Date of publication and mention of the grant of the patent: **04.07.2007**
(21) Application number: 04425843.2
(22) Date of filing: 12.11.2004
(51) Int. Cl.: B60H 1/00

(54) **Vehicle air-conditioning assembly**
Klimatisierungsvorrichtung eines Kraftfahrzeuges
Dispositif de climatisation d'un véhicule

(43) Date of publication of application: 17.05.2006
(73) Proprietor: C.R.F. SOCIETA' CONSORTILE PER AZIONI, 10043 Orbassano (TO) (IT)
(72) Inventor: Mattiello, Fabrizio, Strada Torino, 50 10043 Orbassano (IT); Malvicino, Carloandrea, Strada Torino, 50 10043 Orbassano (IT); Magini, Massimo, Strada Torino, 50 10043 Orbassano (IT); Melisurgo, Vito, Strada Torino, 50 10043 Orbassano (IT); Storgato, Angelo, Strada Torino, 50 10043 Orbassano (IT)
(74) Representative: Cerbaro, Elena

(56) References cited:
- DE-A1- 10 261 037
- US-A- 2 203 477
- US-A1- 2003 121 640

## Description

The present invention relates to a vehicle air-conditioning assembly, in particular for a motor vehicle.

Air-conditioning assemblies for motor vehicles comprise a duct for conveying and treating the air, which is housed in the compartment under the dashboard and has an inlet mouth for the external air connected to the service reservoir, through a hole in the dashboard wall. Said duct houses a fan, a filter, an evaporator defined by a radiator designed to reduce the temperature and the humidity of the air, and a heater designed to raise again the temperature of the air, and terminates in a distribution channel, which conveys the air into the passenger compartment and is provided with deflectors controlled for orienting the flow of conditioned air towards the areas of the passenger compartment chosen by the driver.

In known solutions, the fan is generally of a centrifugal type, receives the external air along its own axis and sends pressurized air, tangentially in a direction of conveying, through the filter, the evaporator and the heater, arranged downstream of the fan.

Since the dimensions of the outlet cross section of the fans are relatively small, the conveying duct comprises a connecting portion having divergent walls between the fan and the filter in the direction of conveying, so as to guide the flow of air coming out of the fan towards the entire surface of the filter and not only onto its central part.

The known solutions just described are far from altogether satisfactory, in so far as they present relatively large overall dimensions in the direction of conveying because of the radial dimensions of the fan and because of the necessary presence of the connecting portion, the walls of which must have angles of divergence that are relatively small to prevent turbulent vortices of the air leaving the fan.

Moreover, in many configurations the air does not arrive from the inlet mouth to the fan in a rectilinear direction but follows curved paths due to the location of the conveying duct in the compartment under the dashboard, with consequent fluid-dynamic losses at the inlet to the fan. Furthermore, curved paths and consequent fluid-dynamic losses are encountered in general also in the distribution channel downstream of the heater.

In US 2003/121640 A1, a heating and/or air-conditioning system for the interior of a vehicle has an air-conveying device, a heat exchanger and an evaporator. At least one air-conveying assembly of the air-conveying device is designed as a disc fan so that the heating and/or air-conditioning system can have as compact a build, as possible and so as to achieve high efficiency.

It discloses a vehicle air-conditioning assembly comprising a conveying duct, which has an inlet mouth for the external air and houses:
- a fan;
- a filter;
- an evaporator; and
- a heater;
said filter, evaporator, and heater being arranged in said duct in series in a rectilinear direction of conveying of the air;
said fan is arranged downstream or upstream of at least one of the air filter and the evaporator along said rectilinear direction of conveying.

The purpose of the present invention is to provide a vehicle air-conditioning assembly, which will enable the problems set forth above to be solved in a simple and economically advantageous way and, preferably, will present contained overall dimensions and a high efficiency of heat exchange.
According to the present invention, a vehicle air-conditioning assembly is provided, comprising a conveying duct, which has an inlet mouth for the external air and houses:
- a fan;
- a filter;
- an evaporator; and
- a heater;
said filter, evaporator, and heater being arranged in said duct in series in a rectilinear direction of conveying of the air;
said fan being set downstream of said filter and evaporator along said rectilinear direction of conveying;
said assembly being characterized in that said fan is set downstream of said heater along said rectilinear direction.

For a better understanding of the present invention, there now follows a description of a preferred embodiment, which is provided purely by way of non-limiting example, with reference to the attached plate of drawings, in which:
- Figure 1 is a perspective view of a preferred embodiment of a vehicle air-conditioning assembly according to the present invention;
- Figure 2 illustrates frontally the assembly of Figure 1, with parts removed for reasons of clarity;
- Figure 3 is a schematic and partial cross-sectional view of a first variant of the assembly of Figures 1 and 2; and
- Figure 4 is a schematic side view of a second variant of the assembly of Figures 1 and 2, illustrated in three different operating positions.

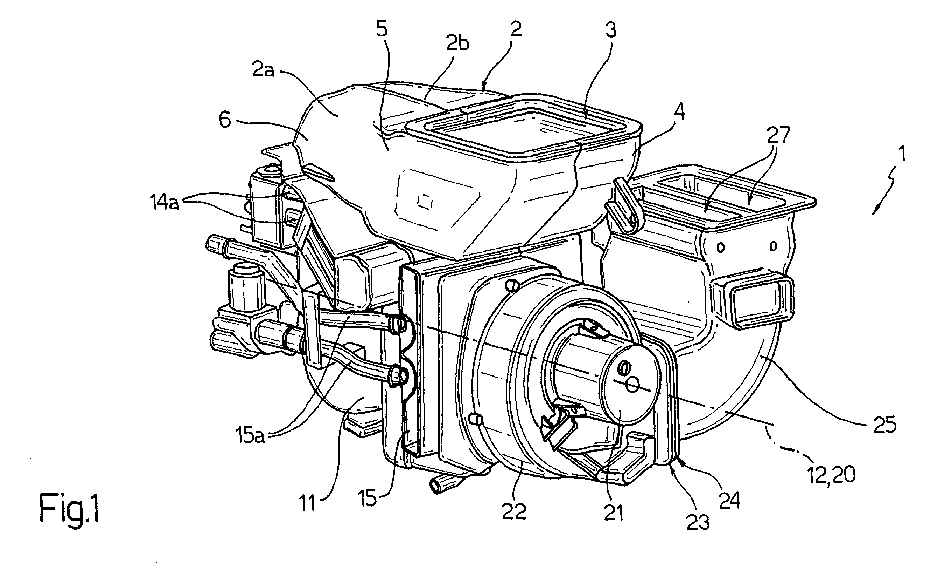

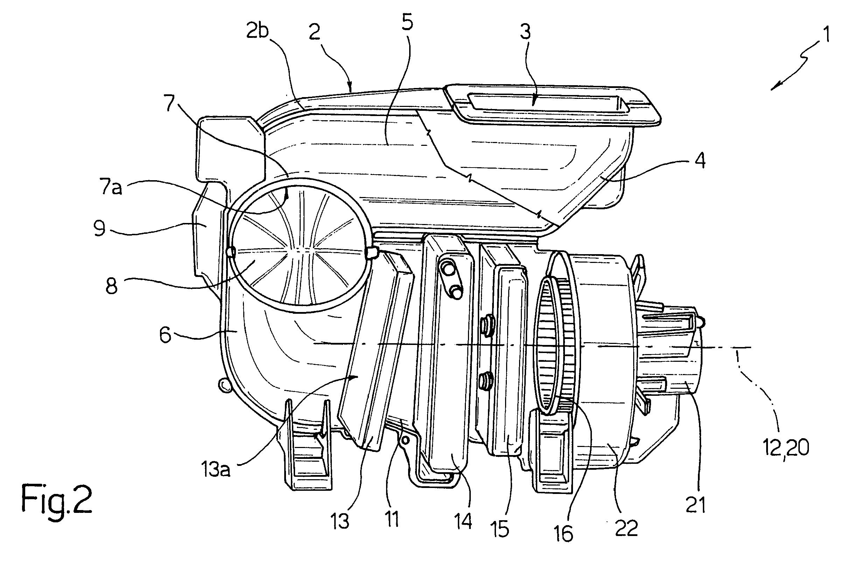

In Figures 1 and 2, the reference number 1 designates an air-conditioning assembly of a motor vehicle (not illustrated). The assembly 1 comprises a conveying duct 2, which is formed by a front half-shell 2a and a rear half-shell 2b, set alongside and fixed to one another, and has a mouth 3 extending in a substantially horizontal plane, to enable inlet of external air in a substantially vertical direction.

The duct 2 comprises a curved portion 4, which connects the mouth 3 with a subsequent substantially rectilinear horizontal portion 5, which extends transversely with respect to the direction of advance of the vehicle and terminates with an elbow 6.

A side wall 7 of the elbow 6 has an opening 7a, through which the duct 2 receives a flow of recirculation air coming from the passenger compartment (not illustrated) of the vehicle. The elbow 6 carries a rotatable door 8, which extends as a prolongation of the side wall 7 with the same curvature, is motor-driven by means of an electric actuator 9 external to the duct 2 for opening/closing selectively the opening 7a and the portion 5, so as to select, accordingly, the conditioning of the external air or else of the recirculation air, in response to a command selected in the passenger compartment.

The elbow 6 reverses the air conveying direction in the duct 2 substantially by 180° towards a portion 11 set under and parallel to the portion 5 and extending in a rectilinear direction 12, along which the air flows.

The portion 11 houses an "anti-pollen" filter 13, an evaporator or cooler 14 (connected by means of pipes 14a to a compressor, not illustrated), a heater 15 (connected by means of pipes 15a to the water-cooled system of the engine of the vehicle), and a centrifugal fan 16, all of which arranged in series to one another in the direction 12.

The filter 13 is set immediately after the elbow 6 and extends in a plane that is not orthogonal to the direction 12, but is inclined so as to direct a front face thereof 13a for inlet of the air upwards, i.e., towards an intermediate portion of the elbow 6. In this way, the flow of air that arrives from the portion 5 through the elbow 6 tends to enter the filter 13 in a direction substantially perpendicular to the face 13a, optimizing the efficiency of the filter 13 itself.

The filter 13, the cooler 14, and the heater 15 are of a traditional type, so that they are not described herein in detail. The regulation of the increase of the temperature made by the heater 15 is performed according to the so-called "water-mixing" process, i.e., regulating the flow rate of water in the heater 15 by means of opening/closing of a valve with which the pipes 15a are provided.

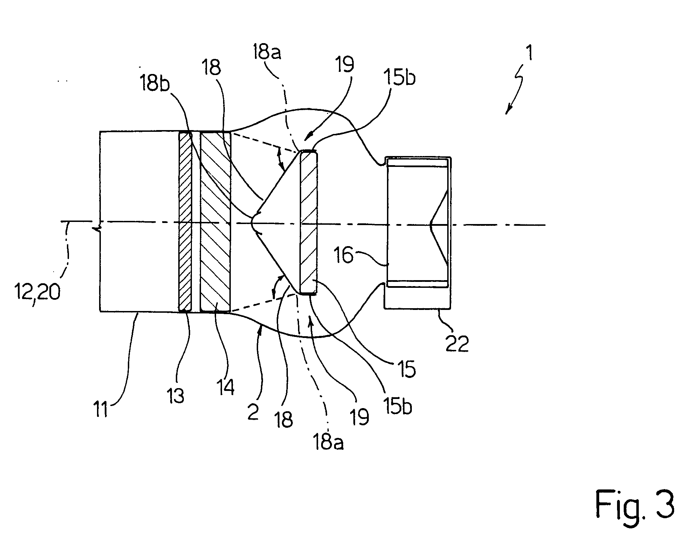

According to the variant of Figure 3, the regulation of the increase of the temperature made by the heater 15 is performed according to a so-called "air-mixing" process, i.e., by varying the flow rate of air entering the heater 15 by means of two mobile doors 18 for partialization or mixing, housed in the portion 11 of the duct 2 in a position intermediate between the cooler 14 and the heater 15. In particular, the doors 18 are rotatable about respective axes 18a, which are parallel to one another and pass along opposite ends 15b of the heater 15, and are motor-driven in a way not illustrated for displacing between a first angular end-of-travel position and a second angular end-of-travel position. In the first end-of-travel position (illustrated with a solid line in Figure 3), the ends of the doors 18 rest on a support 18b set in a fixed position intermediate between the evaporator 14 and the heater 15 so as to close the inlet of the heater 15 and cause the conditioned air to flow in by-pass channels 19, which form part of the portion 11 of the duct 2 and extend on opposite sides of the heater 15 between the ends 15b and the walls of the portion 11 itself. In the second end-of-travel position (illustrated with a line dashed in Figure 3), the ends of the doors 18 rest on the walls of the duct 2 so as to close the channels 19, so that the entire amount of conditioned air traverses the heater 15. In particular, the heater 15 is defined by a radiator, set substantially parallel to the evaporator 14 and orthogonal to the direction 12, and has dimensions smaller than the evaporator 14 in a direction transverse to the direction 12, so that the channels 19 cause only a minimum increase of cross section in the duct 2 with respect to the solution of Figures 1 and 2, whilst the doors 18, in their second end-of-travel position, converge with respect to one another and guide the flow of air from the evaporator 14 to the heater 15 to optimize the efficiency of the assembly 1.

With reference to Figure 2, the fan 16 has an axis 20 of rotation, which coincides substantially with the direction 12, is actuated via an electric motor, of which only the outer shell 21 is visible, and is housed in a half-shell 22, referred to in general as "scroll", fixedly connected to the shell 21 and defining the terminal part of the duct 2. The half-shell 22 has an outlet 23, which directs pressurized conditioned air transversely (in particular tangentially) with respect to the axis 20. According to the solution of Figures 1 and 2, the half-shell 22 is fixed with respect to the remaining part of the duct 2, whilst the outlet 23 communicates permanently with the inlet 24 of a flow-distributor device 25 (which is of a known type and is not described in detail herein), which is provided with deflectors (not illustrated) actuated to direct the flow of conditioned air from the inlet 24 towards various areas of the passenger compartment through respective channels 27 according to the needs of the users in the passenger compartment.

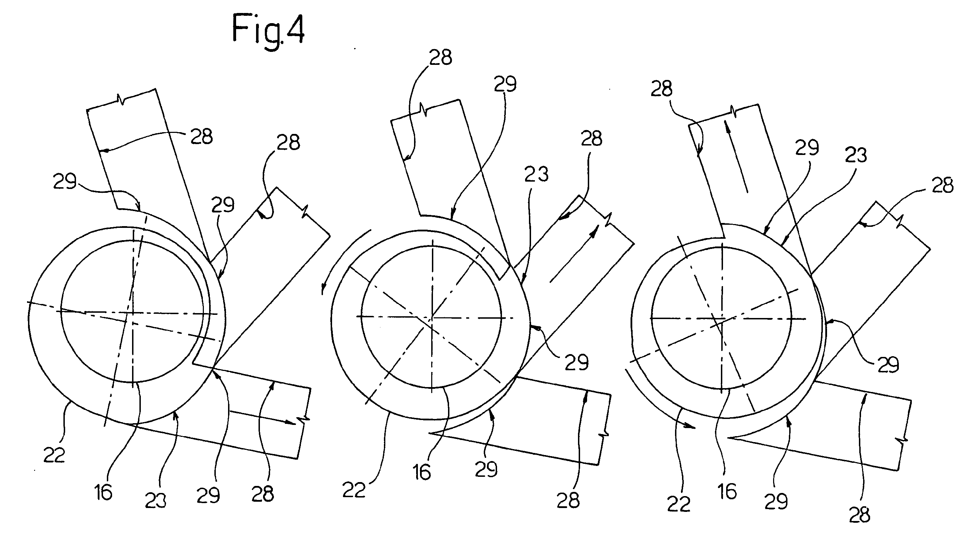

According to the variant of Figure 4, instead, the assembly 1 is without the device 25, but the distribution of the conditioned air in the passenger compartment is performed via a plurality of channels 28 distinct from one another, the inlets 29 of which are distributed along the external periphery of the half-shell 22. The half-shell 22 is coupled to the remaining part of the duct 2 so as to be able to rotate about an axis parallel to the axis 20 and to orient the outlet 23 selectively towards the inlets 29 according to a command selected in the passenger compartment.

According to a preferred embodiment, the rotation of the half-shell 22 is caused by allowing the half-shell 22 and the shell 21 to rotate freely with respect to the remaining part of the duct 2 as a result of the reaction torque acting on the motor for actuating the fan 16 during ventilation, until a desired position of arrest is reached, obtained by angular retention devices (not illustrated). In this case, it is necessary only to control the angular retention devices for releasing and blocking rotation of the outlet 23 according to the channel 28 in which it is desired to supply the conditioned air.

Alternatively, a motor is provided for rotation of the half-shell 22, which is independent of the motor for actuating the fan 16. Said motor for rotation of the half-shell 22 is preferably defined by an electric stepper motor, which is able to block the half-shell 22 angularly, without any need for additional distinct angular retention devices.

Operation of the assembly 1 is evident from the constructional characteristics described above.

It is evident how the assembly 1 has overall dimensions that are relatively contained in the direction 12 in so far as the fan 16 is set downstream of the filter 13, the cooler 14, and the heater 15. In this way, in fact, the portion 11 of the duct 2 does not require divergent or convergent portions for adaptation or guiding of the flow. The fact that the axis 20 coincides with the rectilinear direction 12, in addition to limiting the axial overall dimensions of the assembly 1, enables prevention of localized fluid-dynamic losses of the air in the portion 11, in particular at the inlet of the fan 16, as well as a high efficiency of global heat exchange of the assembly 1.

The high efficiency is then favoured by the orientation of the filter 13, whilst the reduction of the overall dimensions is moreover favoured by the regulation of the heater 15 by means of water mixing, in so far as the channels 19 are absent. However, also with the variant of Figure 3, the overall dimensions are still acceptable in so far as the use of two doors 18 and of two channels 19, instead of just one, and their position in the duct 2 enables limitation of the cross section of the duct 2 and allows the evaporator 14 and the heater 15 to remain aligned in the rectilinear direction 12, thus preventing fluid-dynamic losses along the portion 11.

The compactness of the assembly 1 is then increased by the particular modality of distribution of the air described with reference to Figure 4, basically because it is possible to prevent the use of the device 25 and facilitate design of the layout of the distribution channels 28 towards the mouths for delivery of the air into the passenger compartment.

Finally, it is clear that modifications and variations may be made to the assembly 1 described and illustrated herein, without thereby departing from the scope of protection of the annexed claims.

In particular, the assembly 1 could have a fan different from the fan 16 described by way of example, and/or the duct 2 could be without the portion 5, setting the portion 11 in direct communication with the mouth 3.

## Claims

1. A vehicle air-conditioning assembly (1) comprising a conveying duct (2), which has an inlet mouth (3) for the external air and houses:
- a fan (16);
- a filter (13);
- an evaporator (14); and
- a heater (15);
said filter (13), evaporator (14), and heater (15) being arranged in said duct (2) in series in a rectilinear direction (12) of conveying of the air into the compartment of said vehicle, said fan (16) being set downstream of said filter (13) and evaporator (14) along said rectilinear direction of conveying (22) ;
said assembly being **characterized in that** said fan (16) is set downstream of said heater (15) along said rectilinear direction (12) .

2. The assembly according to Claim 1, **characterized in that** said fan (16) is a centrifugal fan, the axis (20) of rotation of which coincides substantially with said rectilinear direction of conveying (12).

3. The assembly according to Claim 1 or Claim 2, **characterized in that** said conveying duct (2) comprises a curved portion (6) set between said filter (13) and said inlet mouth (3) for reversing the air conveying direction.

4. The assembly according to Claim 3, **characterized in that** said filter (13) is oriented with an angle different from 90° with respect to said rectilinear direction of conveying (12) so as to present a front inlet face (13a) facing said curved portion (6).

5. The assembly according to Claim 3 or Claim 4, **characterized in that** said conveying duct (2) comprises a portion (5) that is substantially rectilinear between said inlet mouth (3) and said curved portion (6) and is substantially parallel to said rectilinear direction of conveying (12).

6. The assembly according to Claim 2, **characterized in that** said duct (2) terminates with a half-shell (22) housing said fan (16) and having an outlet (23) designed to direct the pressurized conditioned air transversely; said half-shell (22) being rotatable with respect to a fixed portion of said conveying duct (2) about an axis of rotation parallel to the axis (20) of said fan (16) so as to vary the direction of outlet of the conditioned air.

7. The assembly according to Claim 6, **characterized in that** it comprises, downstream of said half-shell (22), a plurality of air-distribution channels (28), which are distinct from one another and are designed to receive conditioned air selectively from said fan (16) according to the angular position of said half-shell (22) and to send the air to respective areas of the passenger compartment of the motor vehicle.

8. The assembly according to Claim 6 or Claim 7, **characterized in that** said half-shell (22) is rotated as a result of a reaction torque acting on an electric motor for actuation of said fan (16); retention means being provided for stopping said half-shell (22) angularly in at least three angular reference positions.

9. The assembly according to Claim 6 or Claim 7, **characterized in that** it comprises a motor for rotation of said half-shell (22), distinct from an electric motor for actuation of said fan (16).

10. The assembly according to any one of the preceding claims, **characterized in that** it comprises two doors (18) for partialization of the flow, which can move between a first position, in which they close the inlet of said heater (15) to cause the air to flow in respective bypass channels (19), and a second position, in which they close said bypass channels (19) to cause the entire flow of air to pass through said heater (16).

11. The assembly according to Claim 10, **characterized in that** said bypass channels (19) form part of said conveying duct (2).

12. The assembly according to Claim 10 or Claim 11, **characterized in that** said by-pass channels (19) extend on opposite sides of said heater (16).

13. The assembly according to any one of Claims 10 to 12, **characterized in that** said doors (18) are rotatable about respective axes, which are parallel to one another and pass along respective ends (15b) of said heater (16).

## Patentansprüche

1. Fahrzeug-Klimaanlage (1) mit einem Transportkanal (2), welche eine Einlassöffnung (3) für die Außenluft hat und beinhaltet:
- ein Gebläse (16);
- einen Filter (13);
- einen Verdampfer (14); und
- eine Heizeinrichtung (15);
wobei der Filter (13), der Verdampfer (14) und die Heizeinrichtung (15) in dem Kanal (2) in gerader Richtung (12) des Lufttransports in den Fahrgastraum des Fahrzeugs in Reihe angeordnet sind, wobei das Gebläse (16) stromabwärts des Filters (13) und des Verdampfers (14) entlang der geraden Transportrichtung (12) angeordnet sind;
wobei die Anlage **dadurch gekennzeichnet ist, dass** das Gebläse (16) stromabwärts der Heizeinrichtung (15) entlang der geraden Richtung (12) angeordnet ist.

2. Anlage nach Anspruch 1, **dadurch gekennzeichnet, dass** das Gebläse (16) ein Zentrifugalgebläse ist, dessen Drehachse (20) im Wesentlichen mit der geraden Transportrichtung (12) zusammenfällt.

3. Anlage nach Anspruch 1 oder Anspruch 2, **dadurch gekennzeichnet, dass** der Transportkanal (2) einen gekrümmten Abschnitt (6) aufweist, der zwischen dem Filter (12) und der Einlassöffnung (3) zum Umkehren der Lufttransportrichtung angeordnet ist.

4. Anlage nach Anspruch 3, **dadurch gekennzeichnet, dass** der Filter (13) mit einem von 90° unterschiedlichen Winkel in Bezug zu der geraden Transportrichtung (12) ausgerichtet ist, um so eine vordere Einlassfläche (13a) zu präsentieren, die dem gekrümmten Abschnitt (6) zugewandt ist.

5. Anlage nach Anspruch 3 oder Anspruch 4, **dadurch gekennzeichnet, dass** der Transportkanal (2) einen Abschnitt (5) aufweist, der zwischen der Einlassöffnung (3) und dem gekrümmten Abschnitt (6) im Wesentlichen geradlinig ist und im Wesentlichen parallel zu der geraden Transportrichtung (12) verläuft.

6. Anlage nach Anspruch 2, **dadurch gekennzeichnet, dass** der Kanal (2) mit einer Halbschale (22) endet, die das Gebläse (16) aufnimmt und einen Auslass (23) hat, der so ausgebildet ist, dass die konditionierte Druckluft quer lenkt, wobei die Halbschale (22) in Bezug zu einem festliegenden Abschnitt des Transportkanals (2) um eine Drehachse parallel zu der Achse (20) des Gebläses (16) drehbar ist, um so die Auslassrichtung der konditionierten Luft zu variieren.

7. Anlage nach Anspruch 6, **dadurch gekennzeichnet, dass** diese stromabwärts der Halbschale (22) eine Mehrzahl von Luftverteilungskanälen (28) umfasst, welche voneinander getrennt sind und so ausgelegt sind, dass sie konditionierte Luft wahlweise von dem Gebläse (16) entsprechend der Winkelposition der Halbschale (22) erhalten und die Luft an jeweilige Bereiche des Fahrgastraumes des Motorfahrzeugs schicken.

8. Anlage nach Anspruch 6 oder Anspruch 7, **dadurch gekennzeichnet, dass** die Halbschale (22) aufgrund eines Reaktionsmoments gedreht wird, das auf einem Elektromotor zur Betätigung des Gebläses (16) wirkt; wobei Retentionsmittel vorgesehen sind, um die Halbschale (22) winkelabhängig in wenigstens drei Winkel-Bezugspositionen anzuhalten.

9. Anlage nach Anspruch 6 oder Anspruch 7, **dadurch gekennzeichnet, dass** diese einen Motor zur Drehung der Halbschale (22) umfasst, der von einem Elektromotor zum Betätigen des Gebläses (16) getrennt ist.

10. Anlage nach einem der vorstehenden Ansprüche, **dadurch gekennzeichnet, dass** diese zwei Tore (18) zur Aufteilung der Strömung umfasst, welche sich zwischen einer ersten Position, in welcher sie den Einlass der Heizeinrichtung (15) verschlie-ßen, um die Luft zu veranlassen, in jeweilige Umgehungskanäle (19) zu strömen, und einer zweiten Position, in welcher sie die Umgehungskanäle (19) verschließen, um die gesamte Luftströmung durch die Heizeinrichtung (16) hindurchgehen zu lassen, bewegt werden können.

11. Anlage nach Anspruch 10, **dadurch gekennzeichnet, dass** die Umgehungskanäle (19) einen Teil des Transportkanals (2) bilden.

12. Anlage nach Anspruch 10 oder Anspruch 11, **dadurch gekennzeichnet, dass** sich die Umgehungskanäle (19) auf gegenüberliegenden Seiten der Heizeinrichtung (16) erstrecken.

13. Anlage nach einem der Ansprüche 10 bis 12, **dadurch gekennzeichnet, dass** die Tore (18) um jeweilige Achsen drehbar sind, welche parallel zueinander sind und entlang jeweiliger Enden (15b) der Heizeinrichtung (16) verlaufen.

## Revendications

1. Dispositif de climatisation d'un véhicule (1), comprenant un conduit (2) de transport; possédant une ouverture d'admission (3) pour l'air ambiant extérieur et abritant:
- un ventilateur (16) ;
- un filtre (13) ;
- un évaporateur (14) : et
- un élément chauffant (15) ;
lesdits filtre (13), évaporateur (14) et élément chauffant (15) étant disposés dans le conduit (2), en une série rectiligne (12), dans la direction de transport de l'air vers l'habitacle dudit véhicule ; ledit ventilateur (16) étant disposé en aval dudit filtre (13) et dudit évaporateur (14), dans la même direction rectiligne de transport de l'air (12) ;
ledit ensemble étant **caractérisé en ce que** le ventilateur (16) est disposé en aval de l'élément chauffant (15), dans la même direction rectiligne (12).

2. Ensemble selon la revendication n° 1, **caractérisé en ce que** ledit ventilateur (16) est un ventilateur centrifuge, dont l'axe de rotation (20) coïncide de manière substantielle avec ladite direction rectiligne de transport (12).

3. Ensemble selon la revendication n° 1 ou la revendication n° 2, **caractérisé en ce que** le conduit de transport (2) comprend une section courbée (6), située entre ledit filtre (13) et ladite ouverture d'admission (3), pour inverser la direction de transport de l'air.

4. Ensemble selon la revendication n° 3, **caractérisé en ce que** ledit filtre (13) est orienté à un angle différent de 90° par rapport à ladite direction rectiligne de transport (12), de manière à présenter une face d'admission frontale (13a) orientée vers ladite section courbée (6).

5. Ensemble selon la revendication n° 3 ou la revendication n° 4, **caractérisé en ce que** le conduit (2) comprend une section (5) substantiellement rectiligne, entre ladite ouverture d'admission (3) et la section courbée (6), qui est substantiellement parallèle à ladite direction rectiligne de transport (12).

6. Ensemble selon la revendication n° 2, **caractérisé en ce que** ledit conduit (2) se termine par une demi-coquille (22), abritant ledit ventilateur (16) et possédant une sortie (23), conçue pour diriger l'air climatisé sous pression dans une direction transversale ; ladite demi-coquille (22) étant libre de tourner (pivoter), par rapport à une partie fixe dudit conduit de transport (2), autour d'un axe de rotation parallèle à l'axe (20) dudit ventilateur (16), de manière à changer la direction de sortie de l'air climatisé.

7. Ensemble selon la revendication n° 6, **caractérisé en ce qu'**il comprend, en aval de ladite demi-coquille (22), plusieurs canaux (28) de distribution d'air, distincts l'un de l'autre et qui sont conçus pour recevoir sélectivement l'air climatisé provenant dudit ventilateur (16), en fonction de la position angulaire de ladite demi-coquille (22), et pour transmettre l'air vers des zones correspondantes de l'habitacle du véhicule à moteur.

8. Ensemble selon la revendication n° 6 ou la revendication n° 7, **caractérisé en ce que** la demi-coquille (22) est mise en rotation par un mouvement de couple de réaction agissant sur un moteur électrique, servant à actionner ledit ventilateur (16) ; des dispositifs de blocage étant prévus pour immobiliser la demi-coquille (22) dans au moins trois positions angulaires de référence.

9. Ensemble selon la revendication n° 6 ou la revendication n° 7, **caractérisé en ce qu'**il comprend un moteur pour mettre ladite demi-coquille (22) en rotation, ce moteur étant distinct du moteur électrique servant à actionner ledit ventilateur (16).

10. Ensemble selon l'une quelconque des revendications précédentes, **caractérisé en ce qu'**il comprend deux volets (18), servant à partitionner le débit d'air et pouvant passer d'une première position, dans laquelle ils obstruent l'accès audit élément chauffant (15) pour forcer l'air à passer par des canaux (19) de déviation respectifs, à une deuxième position, dans laquelle ils obstruent les canaux (19) de déviation pour forcer tout le flux d'air à passer au travers de l'élément chauffant (16).

11. Ensemble selon la revendication n° 10, **caractérisé en ce que** lesdits canaux (19) de déviation forment une partie intégrante dudit conduit de transport (2).

12. Ensemble selon la revendication n° 10 ou la revendication n° 11, **caractérisé en ce que** lesdits canaux (19) de déviation sont disposés sur des côtés opposés dudit élément chauffant (16).

13. Ensemble selon l'une quelconque des revendications n° 10 à 12, **caractérisé en ce que** lesdits volets (18) peuvent tourner autour d'axes respectifs, lesquels sont parallèles l'un par rapport à l'autre et passent le long des extrémités respectives (15b) dudit élément chauffant (16).
